# EUROPÄISCHE PATENTSCHRIFT

(11) **EP 1 621 384 B1**
(45) Veröffentlichungstag und Bekanntmachung des Hinweises auf die Patenterteilung: **18.03.2009**
(21) Anmeldenummer: 05010727.5
(22) Anmeldetag: 18.05.2005
(51) Int. Cl.: B60J 5/10

(54) **Kraftfahrzeug-Hecktür**
Rear vehicle door
Hayon arrière de véhicule

(30) Priorität: 28.07.2004 DE 202004011851 U
(43) Veröffentlichungstag der Anmeldung: 01.02.2006
(73) Patentinhaber: PEGUFORM GMBH, 79268 Bötzingen (DE)
(72) Erfinder: Kalmbach, Karl-Heinz, 79111 Freiburg (DE); Schwarz, Timo, 77933 Lahr (DE)
(74) Vertreter: Patentanwälte Westphal, Mussgnug & Partner

(56) Entgegenhaltungen:
- EP-A- 1 129 873
- DE-A1- 3 612 294
- US-A- 5 449 213
- US-A- 6 053 562

## Beschreibung

Die Erfindung betrifft eine Kraftfahrzeug-Hecktür gemäß dem Oberbegriff des Schutzanspruchs 1. Die Erfindung bezieht sich auf Kraftfahrzeug-Hecktüren aller Art. Insbesondere sind von der Erfindung Kraftfahrzeug-Heckklappen umfasst, die im Regelfall schwenkbar an einer Karosserie angebracht sind. Weiterhin sind Heckdrehtüren Gegenstand der Erfindung, bei der die Scharniere seitlich an der Hecktür angreifen. In Kraftfahrzeugen kommen sowohl Einzel- als auch Doppelheckdrehtüren zum Einsatz.

Aus der US 6,053,562 ist eine Kraftfahrzeug-Hecktür bekannt, die als Heckklappe ausgebildet ist. Die bekannte Hecktür besteht aus einem Metallrahmen, welcher dichtend auf einer Karosseriedichtung zur Anlage kommt. Der Rahmen weist zusätzlich eine Querverstrebung auf, die den Rahmen in einen Scheibenbereich und in einen Wandungsbereich unterteilt. Die Scheibe ist bei der bekannten Hecktür von außen direkt an dem Metallrahmen befestigt. Im unteren Bereich weist die Hecktür ein von innen am Rahmen befestigtes Kunststoffteil auf.

Aus der US 6,053,562 ist es weiterhin bekannt, Außenverkleidungsteile unmittelbar von außen am Rahmen zu befestigen.

Da der Rahmen die Auflagefläche zur Auflage auf der Karosseriedichtung bildet, muss dieser entsprechend breit ausgebildet sein, was ein hohes Gesamtgewicht der Kraftfahrzeug-Hecktür zur Folge hat.

Ein weiterer Nachteil der bekannten Hecktür besteht darin, dass das unterschiedliche Wärmeausdehnungsverhalten der Bau-teile nur mangelhaft ausgeglichen werden kann. Hierdurch kommt es zu unerwünschten Relativ-Verschiebungen der Bauteile zueinander.

Weiterhin ist die Montage der bekannten Hecktür äußerst aufwendig.

Aus der US 5,449,213 ist eine Kraftfahrzeughecktüre bekannt, die als Basis einen Aluminiumrahmen aufweist, an dem die Innen- und Außenteile der Hecktüre angeordnet sind.

Der Erfindung liegt die Aufgabe zugrunde, eine einfach zu montierende Kraftfahrzeug-Hecktür anzugeben.

Diese Aufgabe wird durch die Merkmale des Schutzanspruchs 1 gelöst.

vorteilhafte Weiterbildungen der Erfindung sind in den Unteransprüchen angegeben.

Der Erfindung liegt der Gedanke zugrunde, eine Kraftfahrzeug-Hecktür in Verbundbauweise vorzuschlagen, bei der der Rahmen auf ein flächiges Innenteil aufgeklebt ist und bei der das Innenteil die Grenze zwischen Nass- und Trockenbereich bildet. Dabei ist der Rahmen zumindest zum Fahrzeuginnenraum hin vollständig von dem Innenteil verdeckt. Das flächig ausgebildete Innenteil weist nur so viele Öffnungen wie unbedingt notwendig auf, da diese Öffnungen gegenüber dem Fahrzeuginnenraum separat abgedichtet werden müssen.

Im Idealfall wird die Auflagefläche auf der Karosseriedichtung ausschließlich von dem Innenteil gebildet. Dies ist jedoch nur möglich, wenn das Innenteil zwischen Scheibe und Karosseriedichtung weitergeführt ist. Hierzu muss selbstverständlich in dem Innenteil eine Aussparung für die Scheibe vorgesehen sein.

Da das Innenteil die Grenze zwischen Nass- und Trockenbereich bildet, ist es von Vorteil, wenn die Scheibe von außen auf das Innenteil, vorzugsweise auf das Innenteil und auf den Rahmen, aufgeklebt wird. Hierdurch wird eine dichtende Verbindung zwischen Innenteil und Scheibe hergestellt.

In Weiterbildung der Erfindung ist mit vorteil vorgesehen, dass die Außenverkleidungsteile ausschließlich und mechanisch mit dem Innenteil verbunden werden. Hierdurch kann das unterschiedliche Wärmeausdehnungsverhalten von dem Innenteil und den Außenverkleidungsteilen optimal ausgeglichen werden.

Die Ausgestaltung des Innenteils als Kunststoffformteil hat den Vorteil, dass dieses möglichst einfach an sich ändernde Karosserieformen angepasst werden kann. Die Form des Rahmens kann bei geringfügiger Änderung der Karosserieform beibehalten werden, wodurch nur die Form des Innenteils angepasst werden muss. Ein weiterer Vorteil besteht darin, dass das als Formteil ausgebildete Innenteil an jeden beliebigen Dichtungsverlauf auf einfache Weise anpassbar ist.

Mit Vorteil sind die Außenverkleidungen aus Kunststoff ausgebildet, wodurch eine große Designfreiheit realisiert ist. Durch die mechanische Anbindung der Außenverkleidungsteile an das Kunststoff-Innenteil wird der Mantageprozess erheblich erleichtert, da die lackierten Außenverkleidungen erst am Ende des Fertigungsprozesses nach dem Klebeprozess und nach der Montage der Anbauteile montiert werden können. Weiterhin führt die Ausbildung der Außenverkleidungsteile aus Kunststoff zu einer erheblichen Gesamtgewichtsreduktion.

Aufgrund der beschriebenen Modulbauweise ist es möglich, elektrische Verbindungen, Antennenanschlüsse etc. einfach von außen am Innenteil zu befestigen und mittels der Außenverkleidung abzudecken.

Die Anbauteile, bestehend aus Wischermotor, Schloss, Scharnieren, Elektronikmodule etc. sind mit Vorteil an dem Stahl- oder Aluminiumrahmen befestigt.

Anhand von zwei Figuren wird die Erfindung näher beschrieben.

Dabei zeigen:
- Fig. 1: eine Explosionsdarstellung einer erfindungsgemäßen Heckklappe und
- Fig. 2: eine Explosionsdarstellung einer Heckdrehtür, die nicht Gegenstand der Erfindung ist.

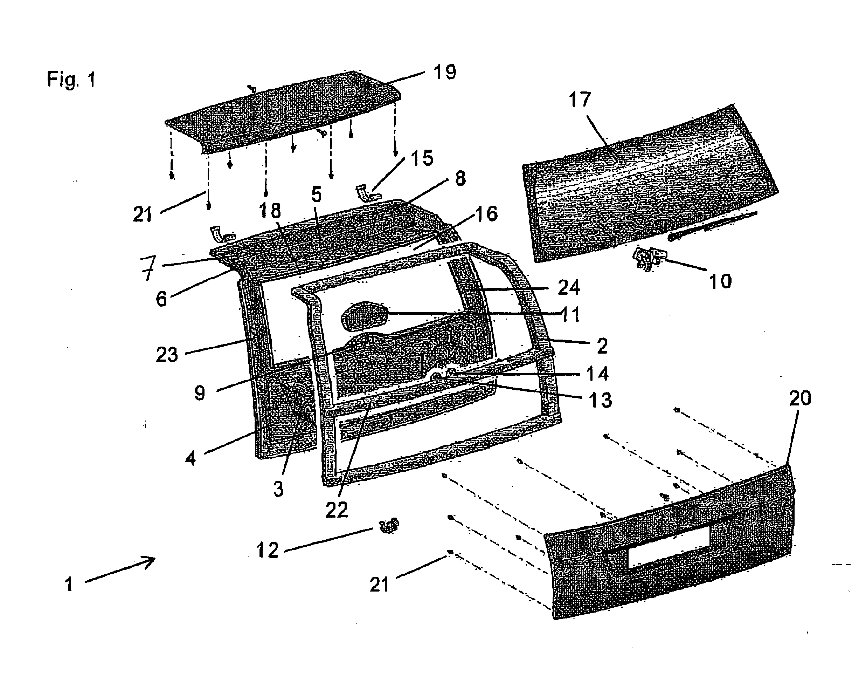

Die in Figur 1 als Heckklappe ausgebildete Kraftfahrzeug-Hecktür 1 besteht im Wesentlichen aus einem Rahmen 2 aus Metallprofil, wobei der Rahmen 2 auf ein Innenteil 3 aufgeklebt ist. Dabei ist das Innenteil 3 als Kunststoff-Formteil ausgebildet.

Das Innenteil 3 ist einteilig und flächig ausgebildet und besteht im Wesentlichen aus zwei Flächen, nämlich einer unteren Teilfläche 4 und einer oberen Teilfläche 5, welche mit Verbindungsflächen 23, 24 verbunden sind. Der Rahmen 2 ist vollständig in Richtung Fahrzeuginnenraum von dem Innenteil 3 verdeckt.

Bei dem in Figur 1 gezeigten Ausführungsbeispiel bildet allein das Innenteil 3 die Auflagefläche 6 zur Auflage auf einer nicht dargestellten Karosseriedichtung. Der Rahmen 2 hat keinerlei Kontakt zu der Karosseriedichtung. Der Rahmen 2 weist aus Stabilisationsgründen eine Querverstrebung 22 auf, die vollständig von dem Innenteil 3 in Richtung Fahrgastzelle abgedeckt ist.

Das Innenteil 3 ist als Grenze zwischen Nass- und Trockenbereich ausgebildet und daher dicht gegenüber dem Fahrzeuginnenraum.

Das Innenteil 3 ist wannenartig ausgebildet und umschließt die Seitenflächen des Rahmens 2.

In das flächige Innenteil 3 sind Montageöffnungen 7, 8, 9 eingebracht. Die Montageöffnung 9 wird von einer Antriebsachse eines Wischermotors 10 durchsetzt. Da sich die Montageöffnung 9 auf dem dem Fahrzeuginnenbereich zugeordneten Teil des Innenteils 3 befindet, ist die Montageöffnung 9 von innen mittels einer Gummitülle (nicht dargestellt) dicht verschlossen. Weitere Montageöffnungen sind aus Übersichtlichkeitsgründen nicht dargestellt. Bei dem Teil 11 handelt es sich um eine Abdeckung, die nur mit dem Innenteil verbunden ist.

Sämtliche Anbauteile, wie der Wischermotor 10 oder ein Schloss 12, sind an dem tragenden Rahmen 2 befestigt. Zur Befestigung des Wischermotors 10 sind zwei benachbarte Laschen 13, 14 am Rahmen 2 vorgesehen.

Die Montageöffnungen 7, 8 werden von Scharnieren 15 durchsetzt. Die Montageöffnungen 7,8 müssen nicht abgedichtet werden, da diese sich außerhalb der Auflagefläche 6 befinden, also nicht dem Karosserie-Innenraum zugeordnet sind.

Im Innenteil ist eine Scheibenöffnung 16 vorgesehen. Eine Scheibe 17 wird von außen auf einen erhöhten Umfangsrand 18 der Scheibenöffnung 16 sowie auf den benachbarten Rahmen 2 aufgeklebt. Es kann ausreichend sein, die Scheibe 17 ausschließlich mit dem Innenteil 3 zu verkleben.

Zur Verkleidung der Kraftfahrzeug-Hecktür sind zwei Außenverkleidungsteile 19, 20 vorgesehen. Diese Außenverkleidungsteile 19, 20 sind ausschließlich am Innenteil 3 befestigt. Hierzu dienen Klipse 21 aus Kunststoff.

Zur Montage der Einzelteile der erfindungsgemäßen Kraftfahrzeug-Hecktür wird zunächst das Innenteil 3 mit dem Rahmen 2 verklebt. Daraufhin wird die Scheibe 17 mit dem Innenteil 3 sowie mit dem Rahmen 2 verklebt. Nach diesem Montageschritt werden die Anbauteile wie Kabelbaum, Elektrokomponenten, Antennen, Scharniere, Wischermotor, Schloss, Schlossbügel, Kugelzapfen für Gasdruckfedern sowie die dritte Bremsleuchte montiert. Nach der Vormontage der Außenverkleidungsteile 19, 20 werden diese mit dem Klipsmechanismus 21 unmittelbar mechanisch mit dem Innenteil 3 verbunden. Aufgrund der leicht zu entfernenden Außenverkleidungsteile 19, 20, die vorteilhafterweise aus Kunststoff ausgebildet sind, können Bagatellschäden einfach durch Austausch des beschädigten Außenverkleidungsteils 19, 20 beseitigt werden. Hierdurch fallen die Reparaturkosten gering aus, was u.a. zu einer besseren Versicherungseinstufung führt.

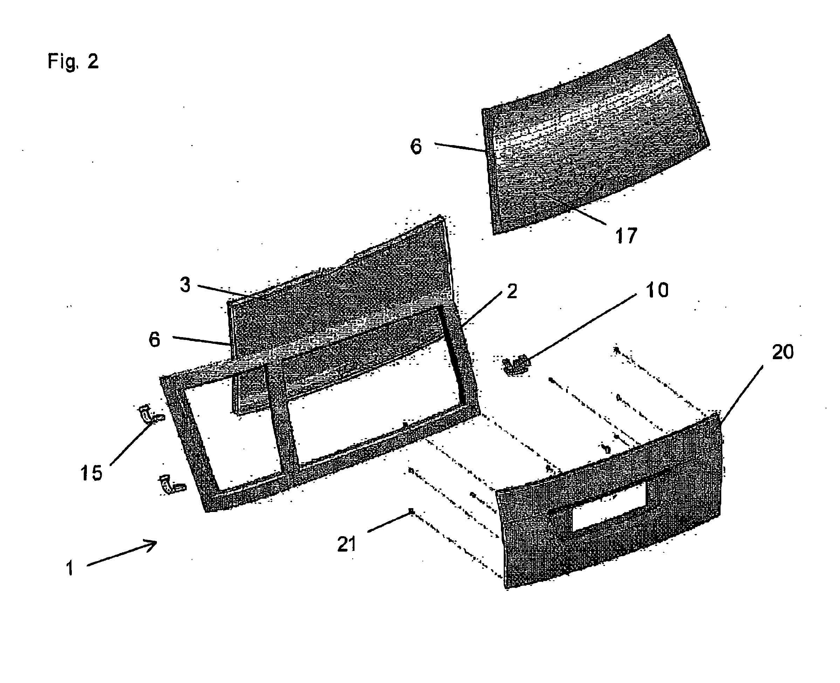

In Figur 2 ist eine als Heckdrehtür ausgebildete Kraftfahrzeug-Hecktür 1 dargestellt, Dabei werden zur Bezeichnung gleicher Bauteile identische Bezugsziffern wie in Figur 1 verwendet.

Die Heckdrehtür weist einen Rahmen 2 auf sowie ein Innenteil 3. Das Innenteil 3 ist flächig ausgebildet und bildet die Anlagefläche 6 an einer Karosseriedichtung. Der Rahmen 2 ist in Fahrzeugrichtung vollständig von dem Innenteil 3 abgedeckt. Sollte der Rahmen 2 über den Bereich der Auflagefläche 6 hinausragen, so muss der über diesen Bereich herausragende Abschnitt selbstverständlich nicht von dem Innenteil 3 abgedeckt sein. Auch in der in Figur 2 dargestellten Tür stellt das Innenteil 3 die Grenze zwischen Nass- und Trockenbereich dar. Auf die Darstellung von Montageöffnungen wurde der Übersichtlichkeit halber verzichtet. Wie in Figur 2 zu erkennen ist, ist die Scheibe 17 rahmenlos ausgebildet. Dies bedeutet, dass die Auflagefläche 6 nicht ausschließlich vom Innenteil 3, sondern zusätzlich von dem Randbereich der Scheibe 17 gebildet ist. Die Scheibe 17 ist bei der gezeigten Tür von außen, beispielsweise mittels eines Steckflansches, an dem Rahmen 2 befestigt.

Die Scharniere 15 sind wie auch bei dem in Figur 1 dargestellten Ausführungsbeispiel am Rahmen 2 befestigt. Ein Außenverkleidungsteil 20 ist mittels des Klipsmechanismus 21 unmittelbar am Innenteil 3 befestigt. Bei der gezeigten Tür ist es jedoch notwendig, das Außenverkleidungsteil 20 zusätzlich im oberen Bereich am Rahmen 2 zu befestigen. Bei der gezeigten Heckdrehtür 1 liegt das Innenteil 3 dichtend von hinten an der Scheibe 17 an, um die Funktion des Innenteils als Grenze zwischen Nass- und Trockenbereich zu gewährleisten.

Selbstverständlich kann zwischen Innenteil 3 und Scheibe 17 eine separate Dichtung vorgesehen sein.

### Bezugszeichenliste

- 1: Kraftfahrzeughecktür
- 2: Rahmen
- 3: Innenteil
- 4: untere Teilfläche
- 5: obere Teilfläche
- 6: Auflagefläche
- 7: Montageöffnungen
- 8: Montageöffnungen
- 9: Montageöffnungen
- 10: Wischermotor
- 11: Abdeckung
- 12: Schloss
- 13: Lasche
- 14: Lasche
- 15: Scharniere
- 16: Scheibenöffnung
- 17: Scheibe
- 18: erhöhter Umfangsrand
- 19: oberes Außenverkleidungsteil
- 20: unteres Außenverkleidungsteil
- 21: Klipsmechanismus
- 22: Querverstrebung
- 23: Verbindungsfläche
- 24: Verbindungsfläche

## Patentansprüche

1. Kraftfahrzeug-Hecktür, insbesondere Heckklappe oder Heckdrehtür, mit einem als Metallprofil ausgeführten Rahmen (2) mit mindestens einem Außenverkleidungsteil (19,20) und mindestens einer Scheibe (17),
**dadurch gekennzeichnet, dass** der Rahmen (2) auf ein einzelnes einstückiges Innenteil (3) aufgeklebt ist und dass das Innenteil (3) die gesamte Auflagefläche (6) zur dichtenden Auflage der Hecktüre auf einer Karosseriedichtung bildet.

2. Kraftfahrzeug-Hecktür nach Anspruch 1,
**dadurch gekennzeichnet, dass** das Innenteil (3) den Rahmen (2) zumindest im Bereich innerhalb der Auflagefläche (6) vollständig in Richtung Fahrgastraum abdeckt.

3. Kraftfahrzeug-Hecktür nach einem der vorhergehenden Ansprüche, **dadurch gekennzeichnet, dass** das Innenteil (3) als Kunststoff-Formteil ausgebildet ist

4. Kraftfahrzeug-Hecktür nach einem der vorhergehenden Ansprüche, **dadurch gekennzeichnet, dass** das Innenteil (3) flächig ausgebildet ist und die Grenze zwischen Nass- und Trockenbereich bildet.

5. Kraftfahrzeug-Hecktür nach einem der vorhergehenden Ansprüche, **dadurch gekennzeichnet, dass** das Innenteil (3) eine oder mehrere Montageöffnungen (7, 8, 9) aufweist.

6. Kraftfahrzeug-Hecktür nach Anspruch 5, **dadurch g ekennzeichnet**, **dass** die Gesamtfläche der Montageöffnungen (7, 8, 9) kleiner ist als die Fläche des Innenteils (3).

7. Kraftfahrzeug-Hecktür nach Anspruch 6, **dadurch g ekennzeichnet, dass** der prozentuale Anteil der Gesamtfläche aller Montageöffnungen (7, 8, 9) an der Fläche des Innenteils (3) kleiner ist als 20%, insbesondere kleiner ist als 10%.

8. Kraftfahrzeug-Hecktür nach einem der vorhergehenden Ansprüche, **dadurch gekennzeichnet, dass,** vorzugsweise fahrzeugseitig, Abdeckungen (11) zum dichtenden Verschließen, zumindest der dem Fahrzeuginnenraum zugeordneten, Montageöffnungen (9) vorgesehen sind.

9. Kraftfahrzeug-Hecktür nach einem der vorhergehenden Ansprüche, **dadurch gekennzeichnet, dass** im Innenteil (3) eine Scheibenausnehmung (16) vorgesehen ist.

10. Kraftfahrzeug-Hecktür nach einem der vorhergehenden Ansprüche, **dadurch gekennzeichnet, dass** die Scheibe (17) von der Außenseite der Hecktür (1) aufgesetzt ist und mit dem Innenteil (3), vorzugsweise mit dem Innenteil (3) und dem Rahmen (2), verklebt ist.

11. Kraftfahrzeug-Hecktür nach einem der vorhergehenden Ansprüche, **dadurch gekennzeichnet, dass** das Innenteil (3), zumindest in Teilbereichen, wannenartig ausgebildet ist, und den Rahmen (2), zumindest teilweise, seitlich überdeckt.

12. Kraftfahrzeug-Hecktür nach einem der vorhergehenden Ansprüche, **dadurch gekennzeichnet, dass,** vorzugsweise alle, Anbauteile (10, 12), vorzugsweise ausschließlich, am Rahmen (2) befestigt sind.

13. Kraftfahrzeug-Hecktür nach einem der vorhergehenden Ansprüche, **dadurch gekennzeichnet, dass** mindestens ein Außenverkleidungsteil (19, 20), vorzugsweise alle Außenverkleidungsteile (19, 20), mindestens teilweise, vorzugsweise ausschließlich, am Innenteil (3) befestigt sind.

14. Kraftfahrzeug-Hecktür nach einem der vorhergehenden Ansprüche, **dadurch gekennzeichnet, dass** die Außenverkleidungsteile (19, 20) am Innenteil (3), vorzugsweise ausschließlich, mit mehreren Klipsmechanismen (21), vorzugsweise aus Kunststoff, befestigt sind.

15. Kraftfahrzeug-Hecktür nach einem der vorhergehenden Ansprüche, **dadurch gekennzeichnet, dass** ein Zuziehgriff einstückig mit dem Innenteil (3) ausgebildet ist.

16. Kraftfahrzeug-Hecktür nach einem der vorhergehenden Ansprüche, **dadurch gekennzeichnet, dass** das Innenteil aus einer Polypropylenmatrix mit Glasfaserverstärkung besteht.

17. Kraftfahrzeug-Hecktür nach einem der vorhergehenden Ansprüche, **dadurch gekennzeichnet, dass** die Wanddicke des Innenteils 2 mm bis 4 mm, vorzugsweise 3 mm, beträgt.

18. Kraftfahrzeug-Hecktür nach einem der vorhergehenden Ansprüche, **dadurch gekennzeichnet, dass** zwischen Rahmen und Innenteil eine Kleberraupe vorgesehen ist, wobei die Raupendicke zwischen 2 mm und 6 mm, vorzugsweise 4 mm, beträgt.

## Claims

1. A rear door of a motor vehicle, in particular a tail gate or a pivoting rear door, having a frame (2) designed as a metal section and with at least one external covering component (19, 20) and at least one window (17),
**characterised in that** the frame (2) is glued to a single, integrally formed inner part (3)
**and in that** the inner part (3) forms the entire bearing surface (6) so that the rear doors lie tightly on a body shell seal.

2. A rear door of a motor vehicle according to Claim 1,
**characterised in that** the inner part (3) completely conceals the frame (2) towards the passenger compartment, at least in the region inside the bearing surface (6).

3. A rear door of a motor vehicle according to one of the preceding Claims,
**characterised in that** the inner part (3) is constructed as a plastics moulding.

4. A rear door of a motor vehicle according to one of the preceding Claims,
**characterised in that** the inner part (3) has a plane design and forms the boundary between the wet and the dry regions.

5. A rear door of a motor vehicle according to one of the preceding Claims,
**characterised in that** the inner part (3) comprises one or more assembly openings (7, 8, 9).

6. A rear door of a motor vehicle according to Claim 5,
**characterised in that** the entire area of the assembly openings (7, 8, 9) is smaller than the area of the inner part (3).

7. A rear door of a motor vehicle according to Claim 6,
**characterised in that** the percentage of the entire area of all assembly openings (7, 8, 9) is less than 20%, in particular less than 10%.

8. A rear door of a motor vehicle according to one of the preceding Claims,
**characterised in that** preferably on the vehicle side there are provided covers (11) for sealing assembly openings (9), at least those assigned to the interior of the vehicle.

9. A rear door of a motor vehicle according to one of the preceding Claims,
**characterised in that** a window recess (16) is provided in the inner part (3).

10. A rear door of a motor vehicle according to one of the preceding Claims,
**characterised in that** the window (17) is positioned from the outside of the rear door (1) and is stuck to the inner part (3), preferably to the inner part (3) and the frame (2).

11. A rear door of a motor vehicle according to one of the preceding Claims,
**characterised in that** the inner part (3) has a trough-shaped design, at least in some areas, and laterally covers the frame (2), at least to some extent.

12. A rear door of a motor vehicle according to one of the preceding Claims,
**characterised in that** preferably all mounted parts (10, 12) are preferably exclusively attached to the frame (2).

13. A rear door of a motor vehicle according to one of the preceding Claims,
**characterised in that** at least one external covering component (19, 20), preferably all external covering components (19, 20), are attached, at least to some extent, preferably exclusively, to the inner part (3).

14. A rear door of a motor vehicle according to one of the preceding Claims,
**characterised in that** the external covering parts (19, 20) are attached to the inner part (3), preferably exclusively, with several clip mechanisms (21), which are preferably made of plastic.

15. A rear door of a motor vehicle according to one of the preceding Claims,
**characterised in that** a pull handle is constructed integrally with the inner part (3).

16. A rear door of a motor vehicle according to one of the preceding Claims,
**characterised in that** the inner part is made from a polypropylene matrix with glass fibre reinforcement.

17. A rear door of a motor vehicle according to one of the preceding Claims,
**characterised in that** the wall thickness of the inner part is 2 mm to 4 mm, preferably 3 mm.

18. A rear door of a motor vehicle according to one of the preceding Claims,
**characterised in that** a bead of adhesive is provided between the frame and the inner part, with the thickness of the bead being between 2 mm and 6 mm, preferably 4 mm.

## Revendications

1. Hayon de véhicule automobile, notamment volet ou portière comportant un cadre (2) réalisé sous la forme d'un profil métallique avec au moins une pièce d'habillage extérieure (19, 20) et au moins une vitre (17),
**caractérisé en ce que**
le cadre (2) est collé sur une pièce intérieure (3) en un seul morceau, et la pièce intérieure (3) constitue toute la surface d'appui (6) pour appuyer le hayon de manière étanche contre un joint de carrosserie.

2. Hayon de véhicule automobile selon la revendication 1,
**caractérisé en ce que**
la partie intérieure (3) couvre le cadre (2) au moins dans la zone intérieure de la surface d'appui (6), de façon complète du côté de l'habitacle.

3. Hayon de véhicule automobile selon l'une des revendications précédentes,
**caractérisé en ce que**
la partie intérieure (3) est une pièce moulée en matière plastique.

4. Hayon de véhicule automobile selon l'une des revendications précédentes,
**caractérisé en ce que**
la partie intérieure (3) est plane et constitue la limite entre la zone humide et la zone sèche.

5. Hayon de véhicule automobile selon l'une des revendications précédentes,
**caractérisé en ce que**
la partie intérieure (3) comporte un ou plusieurs orifices de montage (7, 8,9).

6. Hayon de véhicule automobile selon la revendication 5,
**caractérisé en ce que**
toute la surface des orifices de montage (7, 8, 9) est plus petite que la surface de la partie intérieure (3).

7. Hayon de véhicule automobile selon la revendication 6,
**caractérisé en ce que**
le pourcentage de la surface totale de tous les orifices de montage (7, 8, 9) par rapport à la surface de la partie intérieure (3) est inférieur à 20%, notamment inférieur à 10%.

8. Hayon de véhicule automobile selon l'une des revendications précédentes,
**caractérisé par**
des caches (11), de préférence du côté du véhicule, pour fermer de manière étanche au moins les orifices de montage (9) associés au volume intérieur du véhicule.

9. Hayon de véhicule automobile selon l'une des revendications précédentes,
**caractérisé par**
une cavité pour vitre (16) dans la partie intérieure (3).

10. Hayon de véhicule automobile selon l'une des revendications précédentes,
**caractérisé en ce que**
la vitre (17) est rapportée au hayon (1) à partir de son côté extérieur et est notamment collée à la partie intérieure (3), de préférence à la partie intérieure (3) et au cadre (2).

11. Hayon de véhicule automobile selon l'une des revendications précédentes,
**caractérisé en ce que**
la partie intérieure (3) est en forme de cuvette au moins dans des zones partielles et elle couvre latéralement le cadre (2) au moins en partie.

12. Hayon de véhicule automobile selon l'une des revendications précédentes,
**caractérisé en ce que**
de préférence, tous les composants rapportés (10, 12) sont fixés exclusivement au cadre (2).

13. Hayon de véhicule automobile selon l'une des revendications précédentes,
**caractérisé en ce qu'**
au moins une pièce d'habillage extérieure (19, 20) et de préférence, toutes les pièces d'habillage extérieures (19, 20), sont fixées au moins en partie de préférence exclusivement à la partie intérieure (3).

14. Hayon de véhicule automobile selon l'une des revendications précédentes,
**caractérisé en ce que**
les pièces d'habillage extérieures (19, 20) sont fixées à la partie intérieure (3), de préférence exclusivement à l'aide de plusieurs mécanismes d'enclipsage (21), de préférence en matière plastique.

15. Hayon de véhicule automobile selon l'une des revendications précédentes,
**caractérisé en ce qu'**
une poignée de traction pour fermer, est réalisée en une seule pièce avec la partie intérieure (3).

16. Hayon de véhicule automobile selon l'une des revendications précédentes,
**caractérisé en ce que**
la partie intérieure est formée d'une matrice de polypropylène renforcée par des fibres de verre.

17. Hayon de véhicule automobile selon l'une des revendications précédentes,
**caractérisé en ce que**
l'épaisseur de la paroi de la partie intérieure (3) est comprise entre 2 mm et 4 mm et, de préférence, égale à 3 mm.

18. Hayon de véhicule automobile selon l'une des revendications précédentes,
**caractérisé par**
un cordon de colle prévu entre le cadre et la partie intérieure et l'épaisseur du cordon est comprise entre 2 mm et 6 mm et, de préférence, égale à 4 mm.
